# EUROPEAN PATENT APPLICATION

(11) **EP 4 751 564 A1**
(43) Date of publication of application: **03.06.2026**
(21) Application number: 24215857.4
(22) Date of filing: 27.11.2024
(51) Int. Cl.: A01M 23/24

(54) **A PEST CONTROL DEVICE AND A METHOD FOR MAINTAINING THE PEST CONTROL DEVICE**

(71) Applicant: Anticimex Innovation Center A/S, 3200 Helsinge (DK)
(72) Inventor: FLAGSTAD, Emil Bonnevie, 3450 Allerød (DK); ELMELUND, Jørgen, 3460 Birkerød (DK); NOPPENAU, Lars, 2730 Herlev (DK); HANSEN, Martin Erik, 2750 Ballerup (DK)
(74) Representative: Zacco Denmark A/S

(57) **Abstract**

The disclosure relates to a pest control device (1) comprising: a housing (102) comprising at least one entrance (104) for a pest (105), and an inner compartment (106) comprising a side wall (108) or side walls extending between a first end (110) and a second end (112), wherein the first end (110) is an opening (114), an attracting arrangement (118) arranged to attract the pest (105) to the inner compartment (106); a presence sensor (122) comprising a light source (130) and a light detector (132) arranged at an inner surface of the inner compartment, the presence sensor being arranged to detect presence of the pest (105) within the inner compartment; wherein light from the light source (130) of the presence sensor forms a light path extending across an inner space formed by the side wall (108) or side walls and wherein the light detector (132) is arranged to detect light emitted by the light source (130); a pest control mechanism (126) arranged within the inner compartment (106) between the first end (110) and the presence sensor (122); a control circuitry (128) operably connected to the presence sensor (122) and the pest control mechanism (126); wherein the control circuitry (128) is configured to cause the pest control device (1) to: determine, by the presence sensor (122), a presence of the pest within the inner compartment (106); and actuate the pest control mechanism (126) upon determination of a presence of the pest within the inner compartment (106); wherein the pest control device (1) further comprises a mirror (134) arranged to reflect light from the light source (130) to impinge on the light detector (132) such that a light path (131) extends back and forth across the inner space formed by the side wall or side walls; and wherein the presence sensor (122) further comprises a removable optical object (134,135,137) arranged in the light path wherein the removable optical object is removably attached to the pest control device. The disclosure further relates to a method for maintaining the pest control device.

## Description

### Technical field

The present disclosure relates to a pest control device and a method for maintaining the pest control device. More specifically, the disclosure relates to a pest control device and a method for maintaining the pest control device as defined in the introductory parts of the independent claims.

### Background art

In most cities and in agricultural areas over the world the presence of pests such as rodents, in particular rats, is a problem. Even though pest control has developed immensely during the last decades, severe damages are still today caused by rodents. The damages are not only direct damages, e.g. food or crops being eaten by rodents, but also indirect damages such as pest inflicted sanitary problems for households or business and the spreading diseases. Having reliable and efficient pest control is therefore important from a wide range of aspects.

New and improved methods for pest control are consequently being developed, a great deal of which is based on pesticides, while other methods use traps with or without baits for capturing or killing the pests. To achieve the killing of the pest mechanical and/or electric means are being developed which are designed to ensure efficient pest control while mitigating unnecessary suffering for the pest.

During the last few years, digitally connected pest control devices have become increasingly popular. For instance, the SMART solutions developed and marketed by Anticimex^{™} is one example well-known in the industry of pest control. By having pest control devices and sensors for monitoring that are connected to the Internet, improved monitoring of pest is made possible. This has the advantage that the need for manually checking the pest control devices is reduced. The workload for an operator monitoring or operating the pest control devices may thereby be reduced. To this end, interconnected pest control devices may allow for a more accurate and robust pest control.

Although pest control devices are improving, there is still a need for further development. By way of example, there is a continual need for pest control devices that are safer to use by an operator. There is also a need for pest control devices that can more efficiently lure the pest into the device and to terminate the trapped pests. There is, moreover, a need to reduce the number of false positive, i.e. situations where a pest control device mistakenly detects or triggers an event when no actual pest is present. These false alerts can lead to inefficient time usage, unnecessary transportation, and reducing the overall effectiveness of pest control strategies.

To this end, WO 2021/160819 and EP3613286A1 relate to improved pest control devices. These devices allow for simplified use and more reliable actuation of the kill mechanism for killing pest being trapped. In more detail, WO 2021/160819 discloses a rodent trap comprising a housing, an inner channel, a spring-loaded killing mechanism comprising at least one spring and at least one striker plate, a reloader, a trigger mechanism, and a bait. The housing comprises an opening into the inner channel and one or more sensors arranged at/in the inner channel and/or the opening for triggering the trigger mechanism if a rodent is detected. The striker plate is configured to move between two positions by means of the spring, a first position in which at least a part of the striker plate is arranged at a first side of the inner channel and/or opening leaving the inner channel and/or opening open for passage.

This provides a spring-loaded strike rat trap having a more efficiently used inner space as the striker plate requires less space for its movement. Hence, a more user-friendly design of the spring-loaded strike rat trap in terms of accessibility is provided. This provides easier and more secure arming of the spring-loaded strike rat trap with less risk of injury in case of a "misfire" or accidental triggering while arming and/or having any body member, such as one or more fingers in contact with parts moving when the trap is triggered providing a more robust functionality and improved user safety.

EP3613286A1 discloses a trap for animals, in particular rats or mice, and for being arranged on a substantially horizontal face, where this meets a substantially vertical face. The trap comprising: a first flange and a second flange that are connected substantially at right angles to the effect that the trap can be arranged in two positions, where the substantially horizontal face meets the substantially vertical face. An advantage being that the trap forms a passage of the flanges, base and wall of the trap when it is arranged e.g. on a floor and up against a wall. By configuring the housing with inner passageway extending from the one flange, it is accomplished that the animals come across that passageway when they seek shelter in the passage, and since they feel secure in such place they will often explore the inner passage which is fitted with a killer mechanism and a trigger mechanism that kill the animals that move into the inner passageway.

EP3613286A1 further discloses that the inner passageway may comprise at least two trigger mechanisms that are arranged to each their side of the killer mechanism, which trigger mechanisms are both to be activated before the killer mechanism is triggered. By configuring the trap with two trigger mechanisms at a suitable distance from each other and which are both to be activated before the trap's killer mechanism is released false positive triggering events by which the killer mechanism is releases can be reduced. An improved reliability is further obtained.

Alternative solutions to provide a reliable and robust triggering mechanism are, moreover, disclosed. The kill mechanism may, for example, be activated by using a plurality of triggering mechanisms and the trigger mechanism may comprise sensors that are triggered by the radiation of heat from an animal. By way of example, the trap may comprise two light sensors and two light emitters, wherein the light beams of the two light emitters hit the two light sensors, and the killer mechanism of the trap is, moreover, configured such that it is released when the two light sensors do not register light at the same time. By configuring the trap in this way, a very high degree of security is ensured, since both of the two light beams are to be interrupted in order for the killer mechanism of the trap to be activated.

However, when a trap with optical sensors stand in a dirty and dusty environment for too long, the sensors eventually also become which will degrade the sensitivity of the sensor and thereby reduce the efficiency of the trap. Also when a pest is killed by a trap the sensors occasionally get dirty from particles, blood etc. Cleaning the sensor surfaces is, however, dangerous if the trap is armed as the cleaning procedure would trigger the trap and actuate the killing mechanism.

There is thus a need for enhanced pest control devices with increases safety and accuracy over time.

### Summary

It is an object of the present disclosure to mitigate, alleviate or eliminate one or more of the above-identified deficiencies and disadvantages in the prior art and solve at least the above mentioned problem. According to a first aspect there is provided a pest control device comprising: a housing comprising at least one entrance for a pest, and an inner compartment comprising a side wall or side walls extending between a first end and a second end, wherein the first end is an opening, an attracting arrangement arranged to attract the pest to the inner compartment; a presence sensor comprising a light source and a light detector arranged at an inner surface of the inner compartment, the presence sensor being arranged to detect presence of the pest within the inner compartment; wherein light from the light source of the presence sensor forms a light path extending across an inner space formed by the side wall or side walls and wherein the light detector is arranged to detect light emitted by the light source; a pest control mechanism arranged within the inner compartment between the first end and the presence sensor; a control circuitry operably connected to the presence sensor and the pest control mechanism; wherein the control circuitry is configured to cause the pest control device to: determine, by the presence sensor, a presence of the pest within the inner compartment; and actuate the pest control mechanism upon determination of a presence of the pest within the inner compartment; wherein the pest control device further comprises a mirror arranged to reflect light from the light source to impinge on the light detector such that a light path extends back and forth across the inner space formed by the side wall or side walls; and wherein the presence sensor further comprises a removable optical object arranged in the light path wherein the removable optical object is removably attached to the pest control device.

The removable optical object can thus be removed from the light path and cleaned outside of the trap. As the trap is potentially dangerous when armed safety at maintenance is increased. Cleaning of the removable optical element outside the trap is also much easier as the sensors are otherwise hard to access and thereby also hard to clean.

According to some embodiments, the removable optical object is the mirror, a removable transparent mirror-protecting layer, and/or a removable transparent detector-protecting layer protecting the detector surface.

When a pest is killed in the trap or due to a dirty environment the sensor and the mirror can become dirty. By removing the removable mirror, the removable mirror can easily be cleaned without having to clean inside the trap. By removing a removable transparent mirror-protecting layer any dirt hindering the light path from reaching the mirror may easily be removed without having to clean inside the trap. By removing a removable transparent detector-protecting layer protecting the detector surface any dirt hindering the light path from reaching the detector may easily be removed without having to clean inside the trap.

According to some embodiments, the housing further comprises a hatch covering a hatch compartment; wherein and the mirror, the mirror-protecting layer and/or the detector-protecting layer is arranged to be removable from the pest control device via the hatch compartment.

Easy access to the removable optical object(s) is thereby provided without having to touch anything inside the potentially dangerous inner compartment.

According to some embodiments, pest control device further comprises a first holder for the mirror or mirror-protecting layer, wherein the first holder ends in the hatch compartment. The mirror or the mirror-protecting layer is thereby securely held in its correct position when the trap is in use, while still offering easy removal for cleaning.

According to some embodiments, pest control device further comprises a second holder for the detector-protecting layer, wherein the second holder ends in the hatch compartment.

The detector-protecting layer is thereby securely held in its correct position when the trap is in use, while still offering easy removal for cleaning.

According to some embodiments, the first holder and/or the second holder are/is integrated in the hatch. The removable optical object(s) is/are thereby removed with the opening of the hatch and safety is even further increased for the person maintaining the pest control device.

According to some embodiments, the mirror is concave. Instead of line an animal must then block an area to reduce the detector signal to zero. Using a concave mirror thereby reduces false positives for small insects. The concave mirror may also be made bigger and collect more of the light from the light source increasing the amount of light hitting the detector thereby increasing the signal strength at the detector.

According to some embodiments, the mirror size is adapted to the size of the pest that is intended to be controlled.

According to some embodiments, the light paths of the light emitted by the light source covers an area of the concave mirror; the light source and the light detector are placed at a distance from the mirror; wherein the mirror is concave with a curvature radius with a center point of the radius that is offset with a first distance from the light source and the light detector in a plane of the inner wall at the light source and the light detector and offset with a second distance in a normal direction from said plane. An advantage with this setup is that substantially all of the light from the light source will be focused onto the light detector.According to some embodiments, the second distance and the curvature radius are chosen so that all of the light emitted from the light source is focused onto the light detector.

By focusing the light onto the light detector using the correct curvature and placement of the concave mirror, the intensity of the light emitted from the light emitter can be reduced while still receiving a strong signal at the light detector, thus creating a more efficient pest control device with lower power consumption and better battery lifetime.

According to some embodiments, the presence sensor is arranged to actuate the pest control mechanism only if the light path of the presence sensor is blocked for more than a predetermined time period. According to some embodiments, the predetermined time period is 100-400 ms, preferably 150-250 ms. In that way false positives are avoided e.g. if a fly or another small insect passes the presence sensor briefly.

According to some embodiments, the attraction arrangement is a bait box arranged in the hatch compartment. The bait can then be refilled or checked when cleaning the removable optical object or the other way around. According to some embodiments, the bait box is arranged in a separate compartment under the hatch or integrated in the hatch.

According to some embodiments, the mirror is arranged at the opposing side of the inner compartment relative to the light source. The light path of the presence sensor then extends across the inner compartment so that a pest moving in the inner compartment will trigger the presence sensor if the light path is interrupted.

According to some embodiments, the pest control mechanism is a mechanism comprised in a group consisting of a killing mechanism, a trap door, a gate, a door, a presence notification arrangement. The pest will either be noted as detected, trapped, or killed by the pest control mechanism.

According to some embodiments, the presence sensor is arranged at a predetermined distance from the pest control mechanism, the predetermined distance being based on the anatomy of the pest, which will further reduce false positive actuations of the pest control mechanism for pest not intended to control with the pest control device.

According to some embodiments, the pest comprises wireless communication means for communicating with a wireless network, wherein the control circuitry is configured to cause the pest control device to: determine that the mirror or the transparent mirror-protecting layer needs to be cleaned; transmit a service message that the mirror or the transparent mirror-protecting layer needs to be cleaned.

According to some embodiments, the control circuitry is configured to cause the pest control device to: at a predetermined time interval, measure the signal strength received by the light detector; transmit the service message if the measured signal strength is below a predetermined threshold. Thus, if the light path is obstructed or if the removable optical object is not clean a message is sent that the removable optical object, i.e. the mirror, the mirror-protecting layer and/or the detector-protecting layer, needs cleaning.

According to some embodiments, the mirror, the mirror-protecting layer and/or the detector-protecting layer is placed and shaped so as to be easy to grip when the hatch is open. An advantage is that removing and cleaning the mirror, the mirror-protecting layer and/or the detector-protecting layer faster and easier.

According to some embodiments, the housing is arranged to be placed on the ground and lean against an external structure, wherein the pest control device further comprises a passage for connecting the at least one entrance to the first end of the inner compartment. According to some embodiments, the housing is arranged to lean against an external wall, such that the external wall and the housing forms the passage for connecting the at least one entrance to the first end of the inner compartment.

This will create a tube-like passage between the external structure and the pest control device that rodents find interesting to explore. They will then more likely continue into the inner compartment and actuate the pest control mechanism.

According to some embodiments, the attraction arrangement is arranged at the second end of inner compartment, the second end being opposite to the first end so as to attract a pest to pass the presence sensor and the pest control mechanism.

According to a second aspect there is provided a method for maintaining the pest control device according to the first aspect, the method comprising: removing the removable optical object; cleaning or replacing the mirror, the mirror-protecting layer, or the detector-protecting layer. According to some embodiments, the method further comprises determining that the presence sensor needs to be cleaned; transmitting a service message that the light path of the presence sensor is at least partly obstructed.

Thus, if the light path is obstructed or if the removable optical object is not clean a message is sent that the removable optical object, i.e. the mirror, the mirror-protecting layer and/or the detector-protecting layer, needs cleaning.

According to some embodiments, the method comprises: measuring, at a predetermined time interval, the signal strength received by the light detector; determining that the presence sensor needs to be cleaned if the measured signal strength is below a predetermined threshold transmitting the service message. The time point for service can thereby be precisely determined to optimize maintenance of the pest control device. It is also possible to send a quantified value of the signal degradation so as to warn in advance that service will soon be needed. Service can thereby also be planned to be made before the signal goes to zero due to e.g. a dusty environment.

Effects and features of the second aspect are to a large extent analogous to those described above in connection with the first aspect. Embodiments mentioned in relation to the first aspect are largely compatible with the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a schematic side view of a pest control device according to an embodiment of the present disclosure.
Figure 2 shows the pest control device of Figure 1 having just killed a pest.
Figure 3a shows a schematic perspective view of the pest control device according to an embodiment of the present disclosure a first point in time.
Figure 3b shows a schematic perspective view of the pest control device of Figure 3a from the back side at a second point in time. One portion is enlarged to better display the features relating to the presence sensor.
Figure 3c shows a schematic perspective view of the pest control device of Figure 3b at a third point in time.
Figure 4 shows a schematic flow diagram for a method of using a pest control device according to examples of the present disclosure.
Figure 5a shows a schematic view of a light emitter and a light detector using a flat mirror according to the prior art.
Figure 5b shows a schematic view of a light emitter and a light detector using a concave mirror according to some embodiments of the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

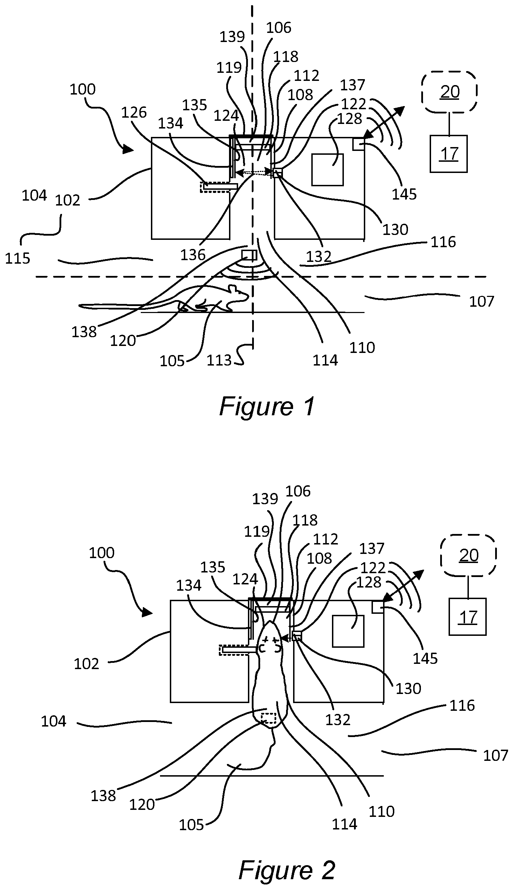

With reference to Figures 1-3c the first end 110 is an opening 114. The housing 102 further comprises a passage 116. The passage 116 is connecting the entrance 104 to the first end 110 of the inner compartment 106. According to some examples, the second entrance 107 is also connected via the passage 116 to the first end 110. The opening 114 allows pest 105 to enter into the inner compartment 106. The passage 116 may extend along a transversal axis 115. The transversal axis 115 may perpendicular to the longitudinal axis 113.

The housing 102 may comprise an attracting arrangement 118. The attracting arrangement 118 is arranged to attract the pest 105 to the inner compartment 106.

The housing comprises a motion sensor 120. The motion sensor 120 is arranged so as to sense a motion of the pest 105 within the passage 116.

The housing 102 comprises a presence sensor 122 arranged at an inner surface 124 of the inner compartment 106. The presence sensor 122 is arranged to detect presence of the pest 105 within the inner compartment 106.

A pest control mechanism 126 is arranged within the inner compartment 106 between the first end 110 and the presence sensor 122.

The removable optical object is the mirror 134, a removable transparent mirror-protecting layer 135, and/or a removable transparent detector-protecting layer 137 protecting the detector surface.

With reference to Figures 1-3c the first aspect of this disclosure shows a pest control device 1 comprising: a housing 102 comprising at least one entrance 104 for a pest 105, and an inner compartment 106 comprising a side wall 108 or side walls extending between a first end 110 and a second end 112, wherein the first end 110 is an opening 114, an attracting arrangement 118 arranged to attract the pest 105 to the inner compartment 106; a presence sensor 122 comprising a light source 130 and a light detector 132 arranged at an inner surface of the inner compartment, the presence sensor being arranged to detect presence of the pest 105 within the inner compartment; wherein light from the light source 130 of the presence sensor forms a light path extending across an inner space formed by the side wall 108 or side walls and wherein the light detector 132 is arranged to detect light emitted by the light source 130; a pest control mechanism 126 arranged within the inner compartment 106 between the first end 110 and the presence sensor 122; a control circuitry 128 operably connected to the presence sensor 122 and the pest control mechanism 126; wherein the control circuitry 128 is configured to cause the pest control device 1 to: determine, by the presence sensor 122, a presence of the pest within the inner compartment 106; and actuate the pest control mechanism 126 upon determination of a presence of the pest within the inner compartment 106; wherein the pest control device 1 further comprises a mirror 134 arranged to reflect light from the light source 130 to impinge on the light detector 132 such that a light path 136 extends back and forth across the inner space formed by the side wall or side walls; and wherein the presence sensor 122 further comprises a removable optical object 134,135,137 arranged in the light path wherein the removable optical object is removably attached to the pest control device.

The removable optical object can thus be removed from the light path and cleaned outside of the trap. As the trap is potentially dangerous when armed safety at maintenance is increased. Cleaning of the removable optical element outside the trap is also much easier as the sensors are otherwise hard to access and thereby also hard to clean.

The housing further comprises a hatch 119 covering a hatch compartment. The mirror 134, the mirror-protecting layer 135 and the detector-protecting layer 137 is arranged to be removable from the pest control device via the hatch compartment 139.

In Figure 1, by way of example, a pest 105, here in the form of a rat, is moving in the passage 104. The motion sensor 120 may be a Passive Infrared sensor, i.e. a PIR sensor. The motion sensor 120 may be arranged to detect the heat, i.e. heat radiation, from the pest 105. In more detail, the motion sensor 120 may be arranged to determine a change in heat radiation. The motion of the pest 105 in the passage 104 may thereby be detected by the motion sensor 120. The motion sensor 120 is illustrated to be arranged in the passage 104 below the opening 114 of the inner compartment 106.

The control circuitry 128 is further configured to cause the pest control device 100 to determine 202 using the motion sensor 120 a movement of the pest within the passage 116 at a movement time point. This is illustrated in Figure 2, in that the method 200 comprises determining 202, by the motion sensor 120 at a movement time point, a movement of the pest 105 within the passage 116.

As discussed above, the presence sensor 122 is arranged at an inner surface 124 of the inner compartment 106. In Figure 1a the pest 105 is not present in the inner compartment 106. Hence, no presence of a pest 105 is detected by the presence sensor 122.

Figure 2, however, illustrates a situation when the pest 105 has moved into the inner compartment 106 at the second point in time. The pest 105 may have been attracted by the attracting arrangement 118.

The presence sensor 122 may thereby detect presence of the pest 105 within the inner compartment 106. In more detail, the control circuitry 128 is configured to cause the pest control device 100 to determine 204 using the presence sensor 122 a presence of the pest within the inner compartment 106 at a presence time point.

The presence sensor 122 may comprise a light source 130 and a light detector 132, wherein light from the light source 130 forms a light path 131 extending across an inner space 125 of the inner compartment 106 formed by the side wall 108 or side walls. The light is reflected in the mirror 134 arranged on the opposite side to the light source of the inner compartment and reflected back across the inner compartment to the light detector 132 arranged adjacent to the light source 130.

The light source 130 may be arranged to emit light in the infrared light range. The light source 130 may be arranged to emit light in the visible light range. The light detector 132 may be arranged to detect all or a portion of the light emitted.

Again, with reference to Figure 2, the control circuitry 128 is arranged to actuate 206 the pest control mechanism 126 upon the presence time point being within a trigger timer range after the movement time point. By way of example, a spring-loaded killing arrangement may be released upon actuation 206 such that a striking element, e.g. a blade, strikes the pest 105. The pest 105 is thereby killed.

The removable mirror 134 or the mirror-protecting layer 135may accessible from the outside of the housing 102. By way of example, the removable mirror 134 or the mirror-protecting layer 135 may have a first holder 141. The first holder 141 may be arranged such that it can be reached from the outside of the housing 102. By way of example, the first holder 141 may be reached from a hatch 119 arranged on the housing 102. The hatch 119 may comprise the bait discussed above. The hatch 119 may contain or give access to a bait box 139 or a drawer arranged to contain the bait. The hatch 119 is in the figures arranged at or adjacent to the second end 112 of the inner compartment 106.

In Figures 1-3c the first holder 141 for the mirror 134 or mirror-protecting layer 135, wherein the first holder 141 ends in the hatch compartment 139 presenting a user-friendly way of accessing and removing the mirror 134 or mirror-protecting layer 135. With reference to the same figures the second holder 143 for the detector-protecting layer also ends in the hatch compartment 139 presenting a user-friendly way of accessing and removing the detector-protecting layer 137.

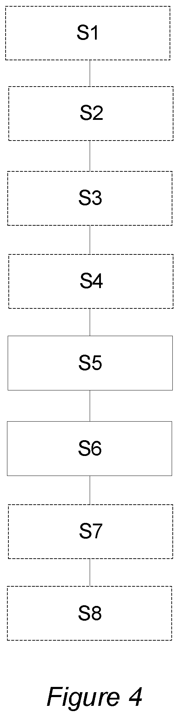

Figure 4a illustrates a pest 105, e.g. a rat moving towards the pest control device at a first point in time. The pest 105 may enter the passage 116 formed by the pest housing 102 of the pest control device 100 and an external wall 140. In more detail, the housing 102 is arranged to lean against an external wall 140 such that the external wall 140 and the housing 102 forms the passage 116 for connecting the entrance 104 to the first end 110 of the inner compartment 106.

Figure 4b illustrates the same pest control device 100 from a different viewing direction. At a second point in time the pest 105 has moved into the passage 116. The second point in time being after the first point in time. The pest 105 may have been attracted into the inner compartment 106 as described above. The pest 105 is in Figure 4b illustrated as having reached to and moved into the opening 114 at the first end 110 of the inner compartment 106. The motion of the pest 104 may be detected by the motion sensor 120. The motion sensor 120 may be a Passive Infrared sensor, i.e. a PIR sensor.

The housing 102 further comprises a presence sensor 122 arranged at an inner surface 124 of the inner compartment 106. The presence sensor 122 is arranged to detect presence of the pest 105 within the inner compartment 106. At this second point in time the pest 105 has not reached the presence sensor 122. This as the presence sensor 122 is arranged at the other side of the killing mechanism 126 as seen from the first end 110 of the inner compartment 106.

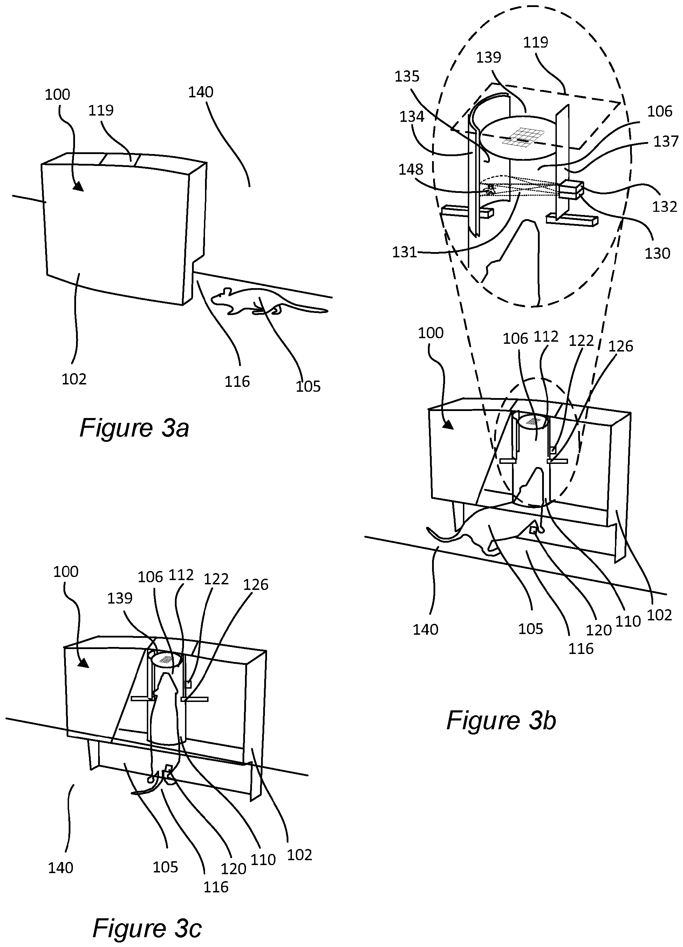

The presence sensor 122 is illustrated in Figure 4b and enlarged in the enlargement ellipse. The presence sensor comprises a light source 130 and a light detector 132. The presence sensor further comprises a mirror 134 at the opposite side across the inner compartments 106. The light from the light source 130 is illustrated as a dashed line forming a light path extending across an inner space 125 of the inner compartment 106 and reflected in the mirror 134. The light detector 132 is arranged to detect light emitted by the light source 130. The mirror as disclosed in Figures 3b and 3c is concave. Instead of line an animal must then block an area to reduce the detector signal to zero. Using a concave mirror thereby reduces false positives for small insects. The concave mirror may also be made bigger and collect more of the light from the light source increasing the amount of light hitting the detector thereby increasing the signal strength at the detector. As seen in Figure 3b the fly 148 will not block much of the signal, while the rat in the position disclosed in Figure 3c will block all of the light path. The mirror 134 size is adapted to the size of the pest that is intended to be controlled. In the case disclosed in Figures 3a-3b the mirror size is chosen to avoid false positives from insects as the therein disclosed pest control device is intended to kill rats.

The presence sensor is arranged to actuate the pest control mechanism 126 only if the light path of the presence sensor is blocked for more than a predetermined time period to further avoid false positives. A rat blocking the light path while pursuing the attraction arrangement 118 will block the light path for a much longer time than a large insect flying past the presence sensor. The predetermined time period is in the range 100-400 ms, preferably 150-250 ms.

The attraction arrangement 118 is in Figures 3b and 3c a bait box arranged in the hatch compartment 139. The bait box may be arranged in a separate compartment under the hatch or integrated in the hatch.

The pest control mechanism 126 is a killing mechanism in Figures 1-3c. However, the pest control mechanism may also be a trap door, a gate, a door, or a presence notification arrangement in other types of pest control devices.

The presence sensor 122 is arranged at a predetermined distance from the pest control mechanism 126, the predetermined distance being based on the anatomy of the pest.

The pest control device further comprises wireless communication means 145 for communicating with a wireless network, wherein the control circuitry 128 is configured to cause the pest control device to: determine that the mirror 134 or the transparent mirror-protecting layer 135 needs to be cleaned; transmit a service message that the mirror 134 or the transparent mirror-protecting layer 135 needs to be cleaned.

The control circuitry is configured to cause the pest control device to: at a predetermined time interval, measure the signal strength received by the light detector; transmit the service message if the measured signal strength is below a predetermined threshold. Thus, if the light path is obstructed or if the removable optical object is not clean a message is sent that the removable optical object, i.e. the mirror, the mirror-protecting layer and/or the detector-protecting layer, needs cleaning.

As disclosed in Figure 3b the removable mirror 134, the mirror-protecting layer 135 and the detector-protecting layer 137 is placed and shaped so as to be easy to grip when the hatch is open.

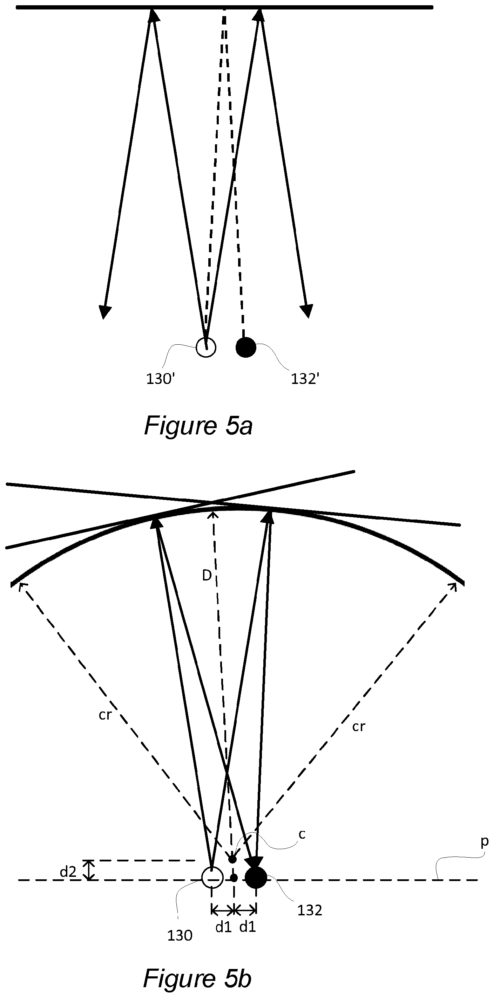

With reference to Figure 5a the drawback of using a planar mirror as in most prior art presence sensors is illustrated. The light emitted from the light emitter 130' is emitted in a cone-like distribution illustrated by the solid line arrows. As seen the reflection of the emitted light in the mirror further distribute the emitted light over an even larger cross-sectional area. Only a small fraction of the emitted light will be received by the light detector 132'.

Now, with reference to Figure 5b, the advantage of using an embodiment of the present disclosure using a concave mirror becomes clear in comparison with Figure 5a. The light paths 131 of the light emitted by the light source 130 covers an area of the concave mirror 134 as indicated by the solid line arrows. The light source 130 and the light detector 132 are placed at a distance D from the mirror 134. The mirror 134 is concave with a curvature radius cr, indicated by dashed arrows, with a center point c that is offset with a first distance d1 from the light source 130 and the light detector 132 in a plane p of the inner wall at the light source 130 the light detector 132. The center point is thus offset equally from the light emitter and from the light detector. The center point (c) is further also offset with a second distance d2 in a normal direction from said plane p.

By focusing the light from the light emitter 130 onto the light detector 132 using the correct curvature and placement of the concave mirror, the intensity of the light emitted from the light emitter 130 can be reduced while still receiving a strong signal at the light detector 132, thus creating a more efficient pest control device with lower power consumption and better battery lifetime

In Figure 5b the second distance d2 and the curvature radius cr are chosen so that all light emitted from the light source is focused onto the light detector, thus optimizing the signal strength received at the light detector.

The second aspect of this disclosure shows a method for maintaining the pest control device according to the first aspect, the method comprising: removing S5 the removable optical object 134, 135, 137; cleaning or replacing S6 the mirror 134 or the mirror-protecting layer 135.

With reference to Figure 4, a method for operating the pest control discussed herein will now be discussed. The method comprises: removing S7 the detector-protecting layer 137; cleaning or replacing S8 the detector-protecting layer 137. The method further comprises determining S2 that the presence sensor 122 needs to be cleaned; transmitting S3 a service message that the light path 136 of the presence sensor 122 is at least partly obstructed. Thus, if the light path is obstructed or if the removable optical object is not clean a message is sent that the removable optical object, i.e. the mirror, the mirror-protecting layer and/or the detector-protecting layer, needs cleaning.

The method further comprises: measuring S1, at a predetermined time interval, the signal strength received by the light detector; determining S2 that the presence sensor 122 needs to be cleaned if the measured signal strength is below a predetermined threshold transmitting S3 the service message. The time point for service can thereby be precisely determined to optimize maintenance of the pest control device. It is also possible to send a quantified value of the signal degradation so as to warn in advance that service will soon be needed. Service can thereby also be planned to be made before the signal goes to zero due to e.g. a dusty environment.

The person skilled in the art realizes that the present disclosure is not limited to the preferred embodiments described above. The person skilled in the art further realizes that modifications and variations are possible within the scope of the appended claims. For example, the pest control device may be a monitoring device instead of the trap disclosed in the Figures then having a pest control arrangement that is presence notification arrangement instead of a killing mechanism. All pest control devices using a presence sensor thus falls under the scope of the claims when having a removable optical object as defined in the claims. Additionally, variations to the disclosed embodiments can be understood and effected by the skilled person in practicing the claimed disclosure, from a study of the drawings, the disclosure, and the appended claims.

## Claims

1. A pest control device (1) comprising:
a housing (102) comprising at least one entrance (104) for a pest (105), and an inner compartment (106) comprising a side wall (108) or side walls extending between a first end (110) and a second end (112), wherein the first end (110) is an opening (114),
an attracting arrangement (118) arranged to attract the pest (105) to the inner compartment (106);
a presence sensor (122) comprising a light source (130) and a light detector (132) arranged at an inner surface of the inner compartment, the presence sensor being arranged to detect presence of the pest (105) within the inner compartment;
wherein light from the light source (130) of the presence sensor forms a light path (131) extending across an inner space formed by the side wall (108) or side walls and wherein the light detector (132) is arranged to detect light emitted by the light source (130);
a pest control mechanism (126) arranged within the inner compartment (106) between the first end (110) and the presence sensor (122);
a control circuitry (128) operably connected to the presence sensor (122) and the pest control mechanism (126);
wherein the control circuitry (128) is configured to cause the pest control device (1) to:
determine, by the presence sensor (122) (at a presence time point), a presence of the pest within the inner compartment (106); and
actuate the pest control mechanism (126) upon determination of a presence of the pest within the inner compartment (106);
wherein the pest control device (1) further comprises a mirror (134) arranged to reflect light from the light source (130) to impinge on the light detector (132) such that a light path (131) extends back and forth across the inner space formed by the side wall or side walls; and
wherein the presence sensor (122) further comprises a removable optical object (134, 135, 137) arranged in the light path wherein the removable optical object is removably attached to the pest control device.

2. The pest control device according to claim 1, wherein the removable optical object is the mirror (134), a removable transparent mirror-protecting layer (135), and/or a removable transparent detector-protecting layer (137) protecting the detector surface.

3. The pest control device according to claim 1 and/or 2, wherein
the housing further comprises a hatch covering a hatch (119) compartment; and
the mirror (134), the mirror-protecting layer (135) and/or the detector-protecting layer (137) is arranged to be removable from the pest control device via the hatch compartment (139).

4. The pest control device according to claim 3, wherein pest control device further comprises a first holder (141) for the mirror (134) or mirror-protecting layer (135), wherein the first holder (141) ends in the hatch compartment (139).

5. The pest control device according to claim 3, wherein pest control device further comprises a second holder (143) for the detector-protecting layer, wherein the second holder (143) ends in the hatch compartment (139).

6. The pest control device according to claim 2 or 3, wherein the first holder and/ or the second holder are/is integrated in the hatch (119).

7. The pest control device according to any one of the preceding claims, wherein the mirror (134) is concave.

8. The pest control device according to claim 7, wherein
the light paths (131) of the light emitted by the light source (130) covers an area of the concave mirror (134);
the light source (130) and the light detector (132) are placed at a distance (D) from the mirror (134);
wherein the mirror (134) is concave with a curvature radius (cr) with a center point (c) offset with a first distance (d1) from the light source (130) and the light detector (132) in a plane (p) of the inner wall at the light source (130) and the light detector (132) and offset with a second distance (d2) in a normal direction from said plane (p).

9. The pest control device according to claim 8, wherein the second distance (d2) and the curvature radius (cr) are chosen so that the light emitted from the light source is focused onto the light detector.

10. The pest control device according to any one of the preceding claims, further comprising wireless communication means (145) for communicating with a wireless network,
wherein the control circuitry (128) is configured to cause the pest control device to:
determine that the mirror (134) or the transparent mirror-protecting layer (135) needs to be cleaned;
transmit a service message that the mirror (134) or the transparent mirror-protecting layer (135) needs to be cleaned.

11. The pest control device according to claim 10, wherein the control circuitry is configured to cause the pest control device to:
at a predetermined time interval, measure the signal strength received by the light detector;
transmit the service message if the measured signal strength is below a predetermined threshold.

12. A method for maintaining the pest control device according to any one of the preceding claims, the method comprising:
removing (S5) the removable optical object (134, 135, 137);
cleaning or replacing (S6) the mirror (134) or the mirror-protecting layer (135).

13. The method according to claim 12, further comprising:
removing (S7) the detector-protecting layer (137);
cleaning or replacing (S8) the detector-protecting layer (137).

14. The method for maintaining the pest control device according to any one of claims 12-13, the method comprising
determining (S2) that the presence sensor (122) needs to be cleaned;
transmitting (S3) a service message that the light path (131) of the presence sensor (122) is at least partly obstructed.

15. The method for maintaining the pest control device according to claim 14, further comprising:
measuring (S1), at a predetermined time interval, the signal strength received by the light detector;
determining (S2) that the presence sensor (122) needs to be cleaned if the measured signal strength is below a predetermined threshold
transmitting (S3) the service message.
